(19) Europäisches Patentamt
European Patent Office
Office européen des brevets

(11) **EP 1 142 727 B1**

(12) **EUROPEAN PATENT SPECIFICATION**

(45) Date of publication and mention
of the grant of the patent:
**10.10.2007  Bulletin 2007/41**

(51) Int Cl.:
**B41M 5/40** [(2006.01)]   **B32B 27/36** [(2006.01)]
**C08J 5/18** [(2006.01)]

(21) Application number: **00969852.3**

(22) Date of filing: **18.10.2000**

(86) International application number:
**PCT/JP2000/007231**

(87) International publication number:
**WO 2001/030584 (03.05.2001 Gazette 2001/18)**

(54) **LAMINATED BASE FILM FOR THERMAL TRANSFER RECORDING MEDIUM**

LAMINIERTER TRÄGER FÜR THERMISCHES ÜBERTRAGUNGSAUFZEICHNUNGSMATERIAL

FILM LAMINE FORMANT SUPPORT DESTINE A UN SUPPORT D'ENREGISTREMENT PAR TRANSFERT THERMIQUE

(84) Designated Contracting States:
**DE FR GB**

(30) Priority: **22.10.1999  JP  30062099**
**01.02.2000  JP  2000023801**

(43) Date of publication of application:
**10.10.2001  Bulletin 2001/41**

(73) Proprietor: **TEIJIN LIMITED**
**Osaka-shi**
**Osaka 541-0054 (JP)**

(72) Inventors:
• **YANO, Shinji,**
**Teijin DuPont Films Japan Limited**
**Sagamihara-shi,**
**Kanagawa 229-1105 (JP)**
• **FUKUDA, Mayasuki**
**Teijin DuPont Films Japan Ltd.**
**Anpachi-gun,**
**Gifu 503-0123 (JP)**
• **KITAZAWA, Satoshi**
**Teijin DuPont Films Japan Ltd.**
**Sagamihara-shi,**
**Kanagawa 229-1105 (JP)**

(74) Representative: **Hallybone, Huw George et al**
**Carpmaels and Ransford,**
**43 Bloomsbury Square**
**London WC1A 2RA (GB)**

(56) References cited:
EP-A- 0 707 979          EP-A- 0 909 780
JP-A- 2 025 396          JP-A- 4 041 297
JP-A- 8 164 592          JP-A- 62 204 939
JP-A- 63 017 023         JP-A- 2000 153 676

**Description**

Field of the Invention

The present invention relates to a thermosensitive transfer laminated film and to use thereof as a base film for thermosensitive transfer recording media. More specifically, it relates to a thermosensitive transfer laminated base film which has excellent adhesion to an ink layer and excellent dimensional stability at the time of printing and provides a transfer image having excellent gradation in a thermosensitive recording medium.

Prior Art

Thermosensitive transfer recording is divided into melting type thermosensitive transfer recording and subliming type thermosensitive transfer recording systems. The former melting type thermosensitive transfer recording system is mainly used for bar codes and facsimiles and employs a heat transfer sheet having an ink layer made from a thermally fusible substance including a colorant. The latter subliming type thermosensitive transfer recording system is now in growing demand as a recording system capable of outputting a high-quality full-color image with ease and employs a heat transfer sheet having an ink layer containing a thermally subliming dye.

JP-A 8-104064 (the term "JP-A" as used herein means an "unexamined published Japanese patent application") discloses a biaxially oriented polyester film of a subliming type thermosensitive transfer system which has a coating layer formed by applying an aqueous solution of an urethane, polyester and acryl or water-dispersible resin to at least one surface of a film before the completion of orientation and crystallization, drying, stretching and heat setting the coating film and which has a plane orientation degree of 0.150 to 0.175.

The above publication teaches that the film hardly causes an ink ribbon to be wrinkled even when a printing paper larger than A-4 size is printed in color, rarely reduces the quality of a printed image by missing characters to be printed and improves adhesion to subliming ink.

In recent years, efforts have been made to speed up the printing of a thermosensitive transfer recording material so that higher temperature and tension than in the prior art are applied to the transfer recording material instantaneously. At this point, the following problems arise in a heat transfer sheet comprising a base film of the prior art.

That is, the heat transfer sheet is heated to melt an ink layer in the case of a melting type and to sublimate a subliming dye in the case of a subliming type to form an image. When adhesion between the ink layer and the base film is poor at the time of heating, a portion other than a portion to be transferred is transferred in the case of a melting type and an entire ink binder is transferred in the case of a subliming type with the result of the occurrence of overtransfer. A deficiency in adhesion is caused by the insufficient heat resistance of an adherent layer and also by a slight dimensional change resulted by the elongation, shrinkage or wrinkling of a polyester film as a base film at the time of heating. The deformation of the polyester film at the time of heating causes not only poor adhesion to the ink layer but also deficiencies in the color strength and gradation of a printed image receiving material.

Summary of the Invention

It is an object of the present invention to provide a thermosensitive transfer laminated film which can give a thermosensitive transfer recording medium having excellent adhesion between an ink layer and a film.

It is another object of the present invention to provide a thermosensitive transfer laminated film which has excellent adhesion to an ink layer and excellent dimensional stability even when it is used in more extreme conditions than in the prior art and has excellent adhesion to both melting type and subliming type ink layers.

It is still another object of the present invention to provide a laminated film for thermosensitive transfer recording media which has excellent dimensional stability at the time of printing and gives a transfer image having excellent gradation.

Other objects and advantages of the present invention will become apparent from the following description.

According to the present invention, the above objects and advantages of the present invention are attained by a thermosensitive transfer laminated film (may be referred to as "second laminated film" hereinafter) comprising:

(A') a biaxially oriented polyester film having a secondary crystallization temperature of 210 to 240˚C, a density of 1.390 to 1.410 and a Young's modulus in a longitudinal direction of 4,500 MPa or more; and
(B) an adherent layer formed on at least one surface of the above biaxially oriented polyester film.

According to the present invention, the above objects and advantages of the present invention are attained by use of the laminated film as the base film of a thermosensitive transfer recording medium.

The Preferred Embodiments of the Invention

A description is given of the laminated film of the present invention.

(polyester)

The polyester constituting the biaxially oriented polyester film of the present invention is preferably a linear saturated polyester comprising an aromatic dibasic acid component and a diol component.

Examples of the aromatic dibasic acid component include terephthalic acid, isophthalic acid, 2,6-naphthalenedicarboxylic acid, hexahydroterephthalic acid and 4,4'-diphenyldicarboxylic acid. Out of these, terephthalic acid and 2,6-naphthalenedicarboxylic acid are particularly preferred because they give a polyester film having excellent mechanical and thermal properties.

Examples of the diol component include ethylene glycol, diethylene glycol, propylene glycol, 1,3-propanediol, 1,4-butanediol, neopentyl glycol, 1,5-pentanediol, 1,6-hexanediol, cyclohexane dimethanol, polyethylene glycol and polytetramethylene glycol. Out of these, ethylene glycol is particularly preferred because it gives a polyester film having excellent mechanical properties.

Examples of the polyester of the present invention include polyethylene terephthalate, polyethylene isophthalate, polybutylene terephthalate, poly(1,4-cyclohexylenedimethylene terephthalate) and polyethylene-2,6-naphthalene dicarboxylate. Out of these, polyethylene terephthalate and polyethylene-2,6-naphthalene dicarboxylate are particularly preferred because they give a polyester film having excellent properties. These polyesters are preferably a homopolymer but they may be a copolymer. A resin other than the polyester may be mixed in a small amount.

Preferably, the polyester used in the present invention contains an inorganic or organic lubricant such as silicon dioxide, calcium carbonate, kaolin or silicone particle having a particle diameter of 0.1 to 5 $\mu$m in an amount of 0.03 to 3.0 wt%. The upper limit of the content of the lubricant is more preferably 1.0 wt% and the lower limit thereof is more preferably 0.1 wt%. When one of the above lubricants is contained, a polyester film whose coating layer has a center line surface roughness of 0.01 to 0.3 $\mu$m can be obtained. When the center line surface roughness of the coating layer is smaller than 0.01 $\mu$m, the slipperiness of the obtained film may become insufficient, whereby when it is used for thermosensitive transfer, the film may wrinkle or may stick to a thermal head portion disadvantageously. When the center line surface roughness of the coating layer is larger than 0.3 $\mu$m, heat conductivity at the time of printing may deteriorate and a satisfactory image may not be obtained.

The polyester used in the present invention may contain a stabilizer, colorant, antioxidant and other additives as required in limits which do not impair performance thereof. (biaxially oriented polyester film)

The biaxially oriented polyester film preferably has a plane orientation degree ($\Delta$P) of 0.150 to 0.200, more preferably 0.160 to 0.190. For example, during thermosensitive transfer printing, the polyester film as a base film receives printing heat while receiving tension in a longitudinal direction. Therefore, when the printing speed is to be increased, great tension is applied to the polyester film and the base film receives high-energy printing heat.

When a base film is the polyester comprising polyethylene terephthalate, the lower limit of plane orientation degree of the base film is preferably 0.180.

The polyester film having a plane orientation degree of the present invention can be obtained as follows, for example. The above polyester is melt extruded into the form of a film which is then wound around a casting drum and solidified by cooling to obtain an unstretched film. This unstretched film is heated at Tg to (Tg + 60)˚C (Tg is the glass transition temperature of the polyester) to be stretched in a longitudinal direction once or two or more times with a total draw ratio of 3 to 7 times. Thereafter, the film is stretched to 3 to 5 times in a transverse direction at Tg to (Tg + 60)˚ C, heated at 200 to 250˚C for 0.1 to 10 seconds and re-heated at a temperature 10 to 20˚C lower than the above heat treatment temperature while it is shrunk by 0 to 20 % or elongated by 0 to 10 % in the transverse direction.

Before stretching, as will be described hereinafter, a coating solution for forming the adherent layer (B) is applied to an unstretched polyester film or uniaxially stretched polyester film and then stretched to form the adherent layer (B).

The orientation state of the film can be controlled by such conditions as the polymerization degree, draw ratio, drawing temperature, drawing speed, heat setting temperature and heat setting time of the polymer. The plane orientation degree ($\Delta$P) of the polyester film can be set to a range of 0.178 to 0.300 by a combination of these conditions. The polyester film having a plane orientation degree ($\Delta$P) within this range can be obtained by increasing the polymerization degree of the polyester polymer used, the drawing speed or the draw ratio to its limit.

The average refractive index (nav) of the polyester film is preferably in the range of 1.600 to 1.610 in the case of a polyethylene terephthalate base film and the range of 1.660 to 1.680 in the case of a polyethylene-2,6-naphthalene dicarboxylate base film.

The birefringence (An) of the polyester film is preferably in the range of 0.000 to 0.100 in the case of a polyethylene terephthalate base film and the range of 0.100 to 0.300 in the case of a polyethylene-2,6-naphthalene dicarboxylate base film. The value An can be obtained by suitably controlling film forming conditions.

Further, the biaxially oriented polyester film of the present invention preferably has a plane orientation degree of 0.178 to 0.300 and a crystallinity (Xc) of 30 % or more. The crystallinity (%) of the polyester film is obtained from the density of the film and defined by following equation (1) when the polyester is polyethylene terephthalate and by the following equation (2) when the polyester is polyethylene-2,6-naphthalene dicarboxylate. This value Xc is used for a film containing a lubricant in an amount of 3.0 wt% or less and for a film containing a coating layer having a thickness of 1 $\mu$m or less.

$$Xc = 100 \times (\rho f - 1.335)/0.120 \qquad (1)$$

(wherein $\rho f$ is the density of the film (g/cm$^3$))

$$Xc = 100 \times (\rho f - 1.325)/0.082 \qquad (2)$$

(wherein $\rho f$ is the density of the film (g/cm$^3$))

The lower limit of crystallinity (%) of this biaxially oriented polyester film is preferably 40 %, particularly preferably 50 % when the polyester is polyethylene terephthalate because an image formed by thermosensitive transfer printing becomes clear. The lower limit of crystallinity (%) of this biaxially oriented polyester film is preferably 35 %, particularly preferably 40 % when the polyester is polyethylene-2,6-naphthalene dicarboxylate because an image formed by thermosensitive transfer printing becomes clear.

The biaxially oriented polyester film of the present invention preferably has a thickness of 0.5 to 10 $\mu$m. The upper limit of thickness is more preferably 5 $\mu$m and the lower limit thereof is more preferably 1 $\mu$m. Due to a recent tendency to reduce the size and increase the printing speed of printers, thin films are in great demand. When a film is too thick, heat conductivity worsens at the time of printing, making high-speed printing impossible.

The biaxially oriented polyester film used in the present invention preferably has a thickness variation in both longitudinal and transverse directions of 0 to 10 %. When the thickness variation is larger than 10 %, a uniform back layer and a uniform ink layer cannot be formed, thereby deteriorating running properties at the time of printing and printing resolution.

(adherent layer)

The adherent layer formed on at least one surface of the biaxially oriented polyester film can be preferably obtained by applying a coating solution containing a thermoplastic resin to at least one surface of the biaxially oriented polyester film, drying, stretching and heating the coating film.

In the present invention, the above thermoplastic resin is preferably a thermoplastic resin dispersible in water (water-dispersible) or soluble in water (water-soluble), or a thermoplastic resin soluble in a solvent. Examples of this thermoplastic resin include an acrylic resin, polyester resin, acryl modified polyester resin, polyurethane resin, polysiloxane resin, epoxy resin, polyether resin, vinyl resin, modified cellulose resin, polyolefin resin and gelatin. These resins may be used alone or in combination of two or more. Out of these, water-dispersible or water-soluble (both may be referred to as "aqueous" hereinafter) thermoplastic resins are particularly preferred because a coating layer can be formed from an aqueous coating solution.

acrylic resin

In the present invention, the acrylic resin is a polymer or copolymer comprising an acrylic monomer as the main component.

Examples of the acrylic monomer include alkyl acrylates and alkyl methacrylates (examples of the alkyl group include methyl, ethyl, n-propyl, isopropyl, n-butyl, isobutyl, t-butyl, 2-ethylhexyl, lauryl, stearyl and cyclohexyl); hydroxy-containing monomers such as 2-hydroxyethyl acrylate, 2-hydroxyethyl methacrylate, 2-hydroxypropyl acrylate and 2-hydroxypropyl methacrylate; epoxy group-containing monomers such as glycidyl acrylate, glycidyl methacrylate and allyl glycidyl ether; monomers containing a carboxy group or salt thereof such as acrylic acid, methacrylic acid, maleic acid, itaconic acid, fumaric acid, crotonic acid and salts thereof (such as sodium salts, potassium salts, ammonium salts and tertiary amine salts); and monomers containing an amide group such as acrylamide, methacrylamide, N-alkylacrylamides, N-alkylmethacrylamides, N,N-dialkylacrylamides, N,N-dialkyl methacrylates (examples of the alkyl group include methyl, ethyl, n-propyl, isopropyl, n-butyl, isobutyl, t-butyl, 2-ethylhexyl and cyclohexyl), N-alkoxyacrylamides, N-alkoxymethacrylamides, N,N-dialkoxyacrylamides, N,N-dialkoxymethacrylamides (examples of the alkoxy group include methoxy, ethoxy, butoxy and isobutoxy), acryloylmorpholine, N-methylolacrylamide, N-methylolmethacrylamide, N-phenylacrylamide and N-phenylmethacrylamide. Two or more of these monomers may be copolymerized.

Out of these acrylic monomers, ethyl acrylate, methyl acrylate, acrylic acid, butyl acrylate, soda acrylate, ammonium acrylate, ethyl methacrylate, methyl methacrylate, methacrylic acid, butyl methacrylate, glycidyl methacrylate, 2-hydroxyethyl acrylate, acrylamide, methacrylamide, N-methoxymethylacrylamide and N-methylolacrylamide are preferred.

The acrylic resin is particularly preferably a water-soluble or water-dispersible resin which contains an alkyl acrylate or alkyl methacrylate as an acrylic monomer in an amount of 30 to 90 mol% and another copolymerizable vinyl monomer component in an amount of 70 to 10 mol%.

Examples of the another vinyl monomer include vinyl isocyanate, allyl isocyanate, styrene, $\alpha$-methylstyrene, soda styrenesulfonate, vinyl methyl ether, vinyl ethyl ether, vinyl trialkoxysilane, vinylidene chloride, ethylene, propylene, vinyl chloride, vinylidene chloride, vinyl acetate, vinyl ether, soda vinylsulfonate, butadiene and soda methacrylate.

The another vinyl monomer is preferably a vinyl monomer having a carboxyl group or salt thereof, acid anhydride group, sulfonic acid group or salt thereof, amide group or alkylolamide group, amino group (including substituted amino group) or alkylolamino group, salt thereof, hydroxyl group or epoxy group as a functional group. Out of these, a carboxyl group or salt thereof, acid anhydride group and epoxy group are particularly preferred. Two or more of these groups may be contained in the resin.

The acrylic resin preferably has a number average molecular weight of 5,000 to 250,000.

polyester resin

In the present invention, the polyester resin is preferably a linear polyester comprising a polybasic acid component and a polyol component, more preferably a linear polyester having a number average molecular weight of 5,000 to 25,000.

Examples of the polybasic acid component include terephthalic acid, isophthalic acid, phthalic acid, 2,6-naphthalenedicarboxylic acid, 1,4-cyclohexanedicarboxylic acid, 4,4'-diphenyldicarboxylic acid, adipic acid, sebacic acid, trimellitic acid, pyromellitic acid, dimer acid, 5-sodium sulfoisophthalic acid, dodecanedicarboxylic acid and hexahydroterephthalic acid. Two or more of these acid components may be used. An unsaturated polybasic acid such as maleic acid or itaconic acid and hydroxycarboxylic acid such as p-hydroxybenzoic acid may be used in a small amount.

Examples of the polyol component include ethylene glycol, diethylene glycol, propylene glycol, dipropylene glycol, 1,3-propanediol, 1,4-butanediol, neopentyl glycol, 1,5-pentanediol, 1,6-hexanediol, dipropylene glycol, triethylene glycol, bisphenol A-alkylene oxide adduct, hydrogenated bisphenol A-alkylene oxide adduct. 1,4-cyclohexanedimethanol, polyethylene glycol and polytetramethylene glycol.

This polyester resin may be copolymerized with a component having a sulfonic acid base to provide hydrophilic nature. When hydrophilic nature is provided to the polyester resin, the dispersibility in an aqueous coating solution of the polyester resin improves advantageously for the formation of a thin film from the aqueous coating solution. Examples of the component include 5-Na sulfoisophthalic acid and 5-K sulfoisophthalic acid.

The polyester resin may comprise a polycarboxylic acid component having a functionality of 3 or more and a polyol component in a small amount (for example, 5 mol% or less) that the polyester resin becomes substantially a linear polymer. Examples of the polycarboxylic acid having a functionality of 3 or more include trimellitic acid, pyromellitic acid and dimethylolpropionic acid. Examples of the polyol include glycerin and trimethylol propane.

acryl modified polyester resin

The acryl modified polyester resin is a copolymer produced by polymerizing an acrylic monomer alone or the acrylic monomer with another monomer in the presence of a polyester. Examples of the polyester are the same as those enumerated for the above polyester resin.

Examples of the acrylic monomer include ethyl acrylate, methyl acrylate, acrylic acid, butyl acrylate, soda acrylate, ammonium acrylate, ethyl methacrylate, methyl methacrylate, methacrylic acid, butyl methacrylate, glycidyl methacrylate, 2-hydroxyethyl acrylate, acrylamide, methacrylamide, N-methoxymethylacrylamide and N-methylolacrylamide.

Examples of the another monomer include $\alpha$-methylstyrene, soda styrenesulfonate, vinyl chloride, vinylidene chloride, vinyl acetate, vinyl ether, soda vinylsulfonate and soda methacrylate.

The acryl modified polyester resin preferably has a number average molecular weight of 5,000 to 250,000.

polyurethane resin

The polyurethane resin is a polymer or copolymer obtained from a polyisocyanate compound and polyhydroxy compound and preferably has a number average molecular weight of 5,000 to 25,000.

The components constituting the urethane-based resin include a polyhydroxy compound, polyisocyanate compound, chain extender and crosslinking agent as given below. Examples of the polyhydroxy compound include polyethers such as polyoxyethylene glycol, polyoxypropylene glycol and polyoxytetramethylene glycol; polyesters such as polyethylene adipate, polyethylene-butylene adipate and polycaprolactone; polycarbonates; and acrylic polyols and castor oil. Examples of the polyisocyanate compound include tolylene diisocyanate, phenylene diisocyanate, 4,4'-diphenylmethane diisocyanate, hexamethylene diisocyanate, xylylene diisocyanate, 4,4'-dicyclohexylmethane diisocyanate and isophorone diisocyanate. Examples of the chain extender or crosslinking agent include ethylene glycol, propylene glycol, diethylene glycol, trimethylolpropane, hydrazine, ethylene diamine, diethylene triamine, ethylene diamine-sodium acrylate adduct, 4,4'-diaminodiphenylmethane, 4,4'-diaminodicyclohexylmethane and water. The polyurethane resin can be synthesized through a commonly used polycondensation-crosslinking reaction by selecting one or more from each group of compounds. Out of these, particularly preferred is an emulsion or aqueous solution of an urethane resin obtained from a diisocyanate, polyether, polyester, glycol, diamine and dimethylolpropionic acid salt.

polysiloxane resin

The polysiloxane resin is preferably a condensate of a silane coupling agent, or a linear or network polymer having in the molecule a siloxane bond such as dimethylpolysiloxane.

epoxy resin

The epoxy resin is a polymer or copolymer obtained from a compound having an epoxy group and preferably has a number average molecular weight of 150 to 30,000. Examples of the compound having an epoxy group include bisphenol glycidyl ether, glycerin polyglycidyl ether and amino glycidyl ether.

polyether resin

The polyether resin is a polymer or copolymer having an ether bond (-C-O-C-) in the skeleton and preferably polyethylene oxide, polypropylene oxide or phenoxy resin. Particularly preferably, the polyether resin has a number average molecular weight of 800 to 400,000.

vinyl resin

The vinyl resin is a polymer or copolymer obtained by addition polymerizing a monomer (vinyl compound) having an unsaturated bond in the molecule. Preferred examples of the vinyl resin include aqueous polymers and copolymers such as polyvinyl alcohol, polyvinyl butyral and polyvinyl acetate.

cellulose resin

The cellulose resin is a resin having a cellulose structure in the molecule. Preferred examples of the cellulose resin include aqueous polymer and copolymers such as cellulose ethers including ethyl cellulose and cellulose esters including triacetyl cellulose and nitro cellulose.

gelatin

The gelatin is polypeptide having a high molecular weight. The gelatin is preferably obtained from a protein raw material such as collagen.

polyolefin resin

Examples of the polyolefin resin include polyethylene, polypropylene and polybutadiene. Out of these, water dispersible polybutadiene and copolymers thereof are particularly preferred.

These resins may be used alone or in combination of two or more.

The thermoplastic resin in the present invention is particularly preferably a combination of an acrylic resin and a polyester resin out of these resins because they have excellent adhesion to a polyester film and adherence to an ink layer.

The amounts of the acrylic resin and the polyester resin are 10 to 90 wt% and 90 to 10 wt% based on the total weight of the acrylic resin and the polyester resin, respectively.

crosslinking agent

A crosslinking agent is preferably used in the adherent layer in the present invention together with the above thermoplastic resin. It improves the cohesion and heat resistance at the time of printing of the coating layer. Examples of the crosslinking agent include an isocyanate compound, epoxy compound, oxazoline compound and melamine compound. These crosslinking agents may be used alone or in combination of two or more.

isocyanate compound

Examples of the isocyanate compound used as a crosslinking agent include tolylene diisocyanate, diphenylmethane-4,4'-diisocyanate, metaxylylene diisocyanate, hexamethylene-1,6-diisocyanate, 1,6-diisocyanate, hexamethylene-1,6-diisocyanate, 1,6-diisocyanatehexane hexane, tolylene diisocyanate-hexanetriol adduct, tolylene diisocyanate-trimethylolpropane adduct, polyol modified diphenyl methane-4,4'-diisocyanate, carbodiimide modified diphenylmethane-4,4'-diisocyanate, isophorone diisocyanate, 1,5-naphthalene diisocyanate, 3,3'-bitolylene-4,4'-diisocyanate, 3,3'-dimethyldiphenylmethane-4,4'-diisocyanate and metaphenylene diisocyanate.

epoxy compound

The epoxy compound used as a crosslinking agent is a polyepoxy compound, diepoxy compound, monoepoxy compound or glycidylamine compound. Examples of the polyepoxy compound include sorbitol, polyglycidyl ether, polyglycerol polyglycidyl ether, pentaerythritol polyglycidyl ether, diglycerol polyglycidyl ether, triglycidyl tris(2-hydroxyethyl) isocyanate, glycerol polyglycidyl ether and trimethylolpropane polyglycidyl ether. Examples of the diepoxy compound include neopentyl glycol, diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compound include allylglycidyl ether, 2-ethylhexyl glycidyl ether and phenylglycidyl ether, and examples of the glycidylamine compound include N,N,N',N'-tetraglycidyl-m-xylylenediamine and 1,3-bis(N,N-diglycidylamino)cyclohexane.

oxazoline compound

The oxazoline compound used as a crosslinking agent is preferably a polymer containing an oxazoline group and can be produced by polymerizing an addition polymerizable oxazoline group-containing monomer alone or the monomer with another monomer. Examples of the addition polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. They may be used alone or in combination of two or more. Out of these, 2-isopropenyl-2-oxazoline is particularly preferred because it is easily acquired industrially. Any monomer is acceptable as the another monomer if it is copolymerizable with the addition polymerizable oxazoline group-containing monomer. Examples of the monomer include (meth)acrylates such as alkyl acrylates and alkyl methacrylates (examples of the alkyl group include methyl, ethyl, n-propyl, isopropyl, n-butyl, isobutyl, t-butyl, 2-ethylhexyl and cyclohexyl); unsaturated carboxylic acids such as acrylic acid, methacrylic acid, itaconic acid, maleic acid, fumaric acid, crotonic acid, styrenesulfonic acid and salts thereof (sodium salts, potassium salts, ammonium salts and tertiary amine salts); unsaturated nitriles such as acrylonitrile and methacrylonitrile; unsaturated amides such as acrylamide, methacrylamide, N-alkylacrylamides, N-alkylmethacrylamides, N,N-dialkylacrylamides and N,N-dialkylmethacrylates (examples of the alkyl group include methyl, ethyl, n-propyl, isopropyl, n-butyl, isobutyl, t-butyl, 2-ethylhexyl and cyclohexyl); vinyl esters such as vinyl acetate and vinyl propionate; vinyl ethers such as methyl vinyl ether and ethyl vinyl ether; $\alpha$-olefins such as ethylene and propylene; halogen-containing $\alpha,\beta$-unsaturated monomers such as vinyl chloride, vinylidene chloride and vinyl fluoride; and a,$\beta$-unsaturated aromatic monomers such as styrene and $\alpha$-methylstyrene. These monomers may be used alone or in combination of two or more.

melamine compound

The melamine compound used as a crosslinking agent is preferably a compound etherified by reacting a lower alcohol such as methyl alcohol, ethyl alcohol or isopropyl alcohol with a methylol melamine derivative obtained by condensing melamine and formaldehyde, or a mixture thereof. Examples of the methylol melamine derivative include monomethylol melamine, dimethylol melamine, trimethylol melamine, tetramethylol melamine, pentamethylol melamine and hexamethylol melamine.

The adherent layer in the present invention is obtained by applying a coating solution containing the above thermoplastic resin to at least one surface of the biaxially oriented polyester film, drying, stretching and heating the coating film. This adherent layer is necessary to improve adhesion between the ink layer and the polyester film. In order to improve adhesion to the ink layer, particularly the thermosensitive transfer ink layer, it is preferred to use a combination of an acrylic resin and a polyester resin in amounts of 90 to 10 wt% and 10 to 90 wt%, respectively.

When the amount of the acrylic resin contained in the adherent layer is smaller than 10 wt% or when the amount of the polyester resin contained in the adherent layer is larger than 90 wt%, adhesion between the ink layer and the adherent layer may be unsatisfactory. When the amount of the polyester resin contained in the adherent layer is smaller than 10 wt% or when the amount of the acrylic resin contained in the adherent layer is larger than 90 wt%, adhesion between the base film and the adherent layer may be unsatisfactory and further the flexibility of the adherent layer may be insufficient. In either case, an excellent image may not be obtained.

The thickness of the adherent layer in the present invention is preferably in the range of 0.001 to 1 $\mu$m. The lower limit of thickness is more preferably 0.01 $\mu$m and the upper limit thereof is more preferably 0.5 $\mu$m. By controlling the thickness of the adherent layer to a range of 0.001 to 1 $\mu$m, adhesion between the adherent layer and the polyester film is improved and blocking hardly occurs when a film having the adherent layer formed thereon is rolled.

The center line average surface roughness of the surface of the adherent layer in the present invention is preferably in the range of 0.01 to 0.3 $\mu$m. By controlling the center line average surface roughness of the surface of the adherent layer to a range of 0.01 to 0.3 $\mu$m, the slipperiness of a film having the adherent layer formed thereon can be improved and an excellent image can be obtained when the laminated film of the present invention is used for thermosensitive transfer.

(coating solution)

In the present invention, the coating solution used to form the adherent layer may be a water solution or solvent solution of a thermoplastic resin, or a water dispersion of a thermoplastic resin if the thermoplastic resin can be uniformly applied to the surface of the polyester film. It is preferably an water solution or water dispersion (aqueous coating solution).

When the coating solution is an aqueous coating solution, it may contain a slight amount of an organic solvent unless it affects other additives. This aqueous coating solution may contain a surfactant such as an anionic, cationic or nonionic surfactant in a required amount.

As the surfactant is preferably a surfactant which can reduce the surface tension of the aqueous coating solution to 40 mN/m or less and promote the wetting of the polyester film. Examples of the surfactant include polyoxyethylene-fatty acid esters, sorbitan fatty acid esters, glycerin fatty acid esters, fatty acid metal soap, alkyl sulfates, alkyl sulfonates, alkyl sulfosuccinates, quaternary ammonium chloride salts, alkylamine hydrochloric acids and betain surfactants. Other additives such as an antistatic agent, ultraviolet light absorbent, pigment, organic filler, inorganic filler, lubricant and anti-blocking agent may be further used in limits that do not annul the effect of the present invention.

(formation of adherent layer)

In the present invention, the adherent layer is preferably formed by applying a coating solution containing a thermoplastic resin to at least one surface of the polyester film, drying, stretching and heating the coating film. This coating solution is preferably applied to one surface or both sides of the polyester film before the completion of crystal orientation in the production process of the polyester film. It may be applied separately from the production process of the polyester film. However, since dust or the like is easily contained in the film and becomes a printing defect in this case, application is preferably carried out as one of the steps of the production process because a clean atmosphere is desired and a preferred film can be produced at a relatively low cost. The solid content of the coating solution is preferably 0.1 to 30 wt%, more preferably 1 to 10 wt%. The amount of coating is preferably 0.5 to 50 g per 1 $m^2$ of the running film.

Any known coating technique may be employed, as exemplified by roll coating, gravure coating, roll brushing, spray coating, air knife coating, immersion, curtain coating and the like. They may be used alone or in combination.

The biaxially oriented polyester film of the present invention has a secondary crystallization temperature of 210 to 240˚C, a density of 1.390 to 1.410 and a Young' s modulus in a longitudinal direction of 4,500 MPa or more. A thermosensitive transfer polyester film which satisfies all the above ranges is suitable for use as a base film for thermosensitive transfer recording media of both a melting type and a subliming type.

The secondary crystallization temperature in the present invention is the temperature of a heat absorption peak which appears on a low temperature side of the melt heat absorption peak of a polymer and is the closest to the melt heat absorption peak of the polymer when 10 mg of a film sample is heated from normal temperature at a rate of 10˚C/min by DSC (differential scanning calorimeter). The upper limit of this secondary crystallization temperature is preferably 230° C and the lower limit thereof is preferably 220° C. When the secondary crystallization temperature is higher than 240° C, the toughness of the obtained film as a thermosensitive transfer base film (may be simply referred to as "base film" hereinafter) becomes insufficient and when the secondary crystallization temperature is lower than 210° C, the shrinkage of the base film becomes marked by high-energy printing heat and the size of the base film cannot be maintained, thereby making it difficult to print an excellent image.

The density of the biaxially oriented polyester film in the present invention must be in the range of 1.390 to 1.410. The upper limit of this density is preferably 1.405 and the lower limit thereof is preferably 1.395. When the density is higher than 1.410, adhesion strength to the adherent layer becomes insufficient and when the density is lower than 1.390, the partial shrinkage of the base film caused by printing heat upon the thermal transfer of the ink layer to an acceptor and the partial elongation of the base film caused by stress become marked, thereby making it difficult to print an excellent image.

The Young's modulus in a longitudinal direction of the biaxially oriented polyester film of the present invention must be 4,500 MPa or more. The lower limit of this Young's modulus is preferably 5,500 MPa, more preferably 6,500 MPa. The upper limit thereof is preferably 13,000 MPa, particularly preferably 10,000 MPa. When the Young's modulus is 4,500 MPa, the partial elongation of the base film upon thermal transfer becomes marked, thereby making it difficult to print an excellent image. When the Young's modulus is larger than 13,000 MPa, the shrinkage of the base film caused by printing heat upon thermal transfer becomes marked, thereby making it difficult to print an excellent image.

The plane orientation degree of the biaxially oriented polyester film in the present invention is preferably in the range of 0.150 to 0.200, more preferably 0.160 to 0.190.

(application of laminated film)

In the present invention, as understood from the above description, the laminated film of the present invention can be advantageously used as a base film for thermosensitive transfer recording media. To this end, an ink layer is formed on the adherent layers of the laminated film.

Examples

The following examples are provided for the purpose of further illustrating the present invention but are in no way to be taken as limiting. Characteristic property values were measured in accordance with the following methods.

1. plane orientation degree (ΔP)

(1-1) plane orientation degree of laminated film

The maximum value nx of refractive index within the plane of a laminated film, the refractive index ny in a direction perpendicular to the above direction and the refractive index nz in a thickness direction of the film are measured using an Abbe's refractometer to calculate the plane orientation degree of the film from the following equation (3). The measurement of the refractive index is measured at 23°C and 65 %RH using a sodium D-ray (589 nm) and methylene iodide or a mixture of methylene iodide and sulfur as a mount solution.

$$\Delta P = [(nx + ny)/2] - nz \qquad (3)$$

(1-2) plane orientation degree of single layer film

The plane orientation degree of a single layer film formed under the same conditions as the above laminated film except that an adherent layer is not formed is measured in the same manner as in (1-1) above.

2. birefringence (Δn)

The maximum value nx of refractive index within the plane of a laminated film or single layer film, the refractive index ny in a direction perpendicular to the above direction and the refractive index nz in a thickness direction of the film are measured in the same manner as the measurement of plane orientation degree to calculate the birefringence of the film from the following equation (4).

$$\Delta n = nx - nz \qquad\qquad (4)$$

3. average refractive index (nav)

The maximum value nx of refractive index within the plane of a laminated film or single layer film, the refractive index ny in a direction perpendicular to the above direction and the refractive index nz in a thickness direction of the film are measured in the same manner as the measurement of plane orientation degree to calculate the average refractive index of the film from the following equation (5).

$$nav = (nx + ny + nz)/3 \qquad\qquad (5)$$

4. density

This is measured in a density gradient tube using an aqueous solution of calcium nitrate at 25° C by the sink-float method.

5. secondary crystallization temperature

This is measured using the DSC (differential scanning calorimeter) of Perkin Elmer Co., Ltd. The measurement method is as follows. 10 mg of a film sample is set in a DSC apparatus and maintained at 30°C for 5 minutes, and the temperature is elevated at a rate of 10°C/min to detect a primary crystallization heat generation peak, a secondary crystallization absorption peak and a polymer melting peak. Out of these peaks, the temperature of a heat absorption peak which appears on a low temperature side of the melt heat absorption peak of the polymer and is the closest to the melt heat absorption peak of the polymer is taken as secondary crystallization temperature.

6. glass transition temperature (Tg)

This is measured using the DSC (differential scanning calorimeter) of Perkin Elmer Co., Ltd. The measurement method is as follows. 10 mg of a sample is set in a DSC apparatus, molten at 300° C for 5 minutes and quenched in liquid nitrogen. The temperature of this quenched sample is increased at a rate of 10°C/min and the temperature of an intermediate point in an area where discontinuity appears on the base line is taken as Tg.

7. Young's modulus

The Young's modulus in a longitudinal direction of a film is measured by setting a film sample which is cut out in a form having a length of 180 mm in a longitudinal direction and a length of 10 mm in a transverse direction, at a width of 10 mm and a chuck interval of 100 mm in a tensile tester and pulling it at a tensile speed of 200 mm/min at 23°C and 65 %RH.

8. thickness of film

A 10 cm x 10 cm film sample is cut out from a film and measured for its weight to calculate the thickness of the film from the density of a polyester.

9. thickness of adherent layer

The thickness of the adherent layer is calculated from the amount of coating per 1 $m^2$ and the solid content of the coating solution.

10. center line average surface roughness (Ra)

This is measured in accordance with the method specified in JIS B0601-1976 using the SE-3F surface roughness meter of Kosaka Kenkyusho Co., Ltd. The center line average roughness is obtained under such conditions as a tracer diameter of 2 $\mu$m, a tracer weight of 30 mg, a cut-off value of 0.08 mm and a measurement length of 2.5 mm and measured at 12 points, the largest value and the smallest value are eliminated from the 12 measurement data, and the average value of the 10 measurement data is taken as Ra.

11. adhesion and clearness

A back layer is formed on a side opposite to the adherent layer of the film, and an ink layer is formed on the adherent layer side to prepare a thermosensitive transfer material. Solid printing as wide as 15 cm and as long as 25 cm is made at the center of an A-4 size image receiving paper by a melting type/subliming type heat transfer system full-color printer (ColorPoint 1820PSJ, trade name of Seiko Instruments Inc.) using this thermosensitive transfer material. The state of abnormal transfer of the ink layer and the clearness of the obtained image are observed visually and evaluated as follows. (11-1) adhesion

○ : no abnormal transfer of ink layer

Δ: less than 1 % of abnormal transfer of ink layer

X : 1% or more and less than 10 % of abnormal transfer of ink layer

X X : 10 % or more of abnormal transfer of ink layer

(11-2) clearness

◎: extremely clear image

○: clear image

Δ: partly unclear image

✕: mostly unclear image

"back layer"

* coating solution for back layer

3 wt% of amino modified silicone, 2 wt% of epoxy modified silicone and 95 wt% of solvent (ethanol/isopropyl alcohol = 1/1)

application conditions: applied to a coating weight of 0.5 g/m$^2$ in a dry state and dried at 80˚C for 1 minute

"ink layer"

* coating solution for melting type heat transfer ink layer 35 wt% of phthalocyanine blue, 25 wt% of α-olefin/maleic anhydride copolymer wax (melting point of 72˚C), 35 wt% of paraffin wax (melting point of 70˚C), and 5 wt% of ethylene/vinyl acetate copolymer (softening point of 78˚ C) application conditions: applied to a coating weight of 0.6 g/m$^2$ by a hot melt method

* coating solution for subliming type heat transfer ink layer 4 wt% of KST-B-136 (subliming dye, trade name of Nippon Kayaku Co., Ltd.), 6 wt% of polyvinyl acetoacetal (trade name of Sekisui Chemical Co., Ltd.) and 90 wt% of solvent (methyl ethyl ketone/toluene= 1/1)

application conditions: applied to a coating weight of 1 g/m$^2$ in a dry state and dried at 80˚C for 1 minute

Examples 1 to 3

Polyethylene terephthalate (containing lubricant, Tg = 78˚C) having an intrinsic viscosity measured in o-chlorophenol at 25˚C of 0.61 dl/g was extruded from a T die and quenched on a rotary cooling drum maintained at about 40˚C while static electricity was applied thereto to obtain an unstretched film. This unstretched film was then stretched to 4.2 times in a longitudinal direction at 115˚C to obtain a uniaxially stretched film. A coating solution having a solid content of 4 wt% shown in Table 2 was selected from coating solutions shown in Table 1 and applied to one surface of this uniaxially stretched film to a coating weight of 2 g/m$^2$ by a kiss coating technique. Thereafter, the coated film was stretched to 3.8 times in a transverse direction at 115˚C, heated under tension at 220˚C with a fixed length, and reheated at 210˚ C while it was elongated by 2 % in a transverse direction to obtain a biaxially oriented polyester film having a thickness of 4. 5 μm. The physical properties and evaluation results of this film are shown in Table 2.

Example 4

Polyethylene-2,6-naphthalate (containing lubricant, Tg = 121˚C) having an intrinsic viscosity measured in o-chlorophenol at 25˚C of 0.63 dl/g was extruded from a T die and quenched on a rotary cooling drum maintained at about 40˚ C while static electricity was applied thereto to obtain an unstretched film. This unstretched film was then stretched to 4.5 times in a longitudinal direction at 135˚C to obtain auniaxiallystretchedfilm. Acoatingsolutionhavingasolid content of 4 wt% shown in Table 2 was selected from coating solutions shown in Table 1 and applied to one surface of this uniaxially stretched film to a coating weight of 2 g/m$^2$ by a kiss coating technique. Thereafter, the coated film was stretched to 4.0 times in a transverse direction at 140˚C, heated under tension at 235˚ C with a fixed length, and reheated at 230˚ C while it was elongated by 2 % in a transverse direction to obtain a biaxially oriented polyester film having a thickness of 4. 5 μm. The physical properties and evaluation results of this film are shown in Table 2.

Comparative Examples 1 and 2

Polyethylene terephthalate (containing lubricant, Tg = 78˚C) having an intrinsic viscosity measured in o-chlorophenol at 25˚C of 0.61 dl/g was extruded from a T die and quenched on a rotary cooling drum maintained at about 40˚C while static electricity was applied thereto to obtain an unstretched film. This unstretched film was then stretched to 4.2 times in a longitudinal direction at 115˚C to obtain a uniaxially stretched film. A coating solution having a solid content of 4 wt% shown in Table 2 was selected from coating solutions shown in Table 1 and applied to one surface of this uniaxially stretched film to a coating weight of 2 g/m$^2$ by a kiss coating technique. Thereafter, the coated film was stretched to 3.8 times in a transverse direction at 120˚C, heated under tension at 220˚ Cwithafixedlength, andre-heated at 215˚ C while it was shrunk by 6 % in a transverse direction to obtain a biaxially oriented polyester film having a thickness of 4.5 μm. The physical properties and evaluation results of this film are shown in Table 2.

Comparative Example 3

A biaxially oriented polyester film was obtained in the same manner as in Example 1 except that an adherent layer was not formed by coating. The physical properties and evaluation results of this film are shown in Table 2.

EP 1 142 727 B1

Table 1

| | composition of adherent layer (wt%) | | | | |
|---|---|---|---|---|---|
| | acrylic resin 1 | polyester resin 1 | acryl modified polyester resin 1 | crosslinking agent | wetting agent |
| coating solution 1 | 45 | 45 | | | 10 |
| coating solution 2 | 42 | 42 | | 6 | 10 |
| coating solution 3 | | | 84 | 6 | 10 |

The compositions of the resins of Table 1 are as follows. acrylic resin 1: acrylic polymer obtained by polymerizing 75 mol% of methyl methacrylate/15 mol% of ethyl acrylate/5 mol% of N-methylolacrylamide/5 mol% of methacrylic acid. polyester resin 1: copolyester comprising 35 mol% of terephthalic acid/9 mol% of isophthalic acid/6 mol% of 5-sodium sulfoisophthalic acid as acid components and 46 mol% of ethylene glycol/4 mol% of diethylene glycol as glycol components.

acryl modified polyester resin 1: acryl modified copolyester comprising 70 mol% of methyl methacrylate/20 mol% of isobutyl methacrylate/5 mol% of acrylic acid/5 mol% of glycidyl methacrylate as acrylic components, 40 mol% of terephthalic acid/4 mol% of isophthalic acid/6 mol% of 5-sodium sulfoisophthalic acid as acid components in polyester components , and 45 mol% of ethylene glycol/5 mol% of diethylene glycol as glycol components in polyester components.

crosslinking agent:

1,3-bis(N,N-diglycidylamine)cyclohexane

wetting agent: polyoxyethylene (n = 7) lauryl ether

Table 2

| | coating agent | adhesion | | clearness | |
|---|---|---|---|---|---|
| | | melting type | subliming type | melting type | subliming type |
| Ex.1 | coating solution 1 | ○ | ○ | ○ | ○ |
| Ex.2 | coating solution 2 | ○ | ○ | ○ | ○ |
| Ex.3 | coating solution 3 | ○ | ○ | ○ | ○ |
| Ex.4 | coating solution 1 | ○ | ○ | ○ | ◎ |
| C.Ex.1 | coating solution 1 | ○ | ○ | △ | × |
| C.Ex.2 | coating solution 2 | ○ | ○ | △ | × |
| C.Ex.3 | no coating agent | × | × | × | × |

| | plane orientation degree (laminated film) | plane orientation degree (single layer film) | density (g/cm³) | crystallinity (%) | center line surface roughness (μm) |
|---|---|---|---|---|---|
| Ex.1 | 0.185 | 0.185 | 1.396 | 51 | 0.082 |
| Ex.2 | 0.183 | 0.185 | 1.396 | 51 | 0.078 |
| Ex.3 | 0.184 | 0.185 | 1.396 | 51 | 0.80 |
| Ex.4 | 0.267 | 0.267 | 1.358 | 40 | 0.084 |
| C.Ex.1 | 0.159 | 0.160 | 1.395 | 50 | 0.083 |
| C.Ex.2 | 0.162 | 0.160 | 1.395 | 50 | 0.089 |
| C.Ex.3 | - | 0.185 | 1.396 | 51 | 0.077 |

Ex.: Example      C.Ex.: Comparative Example

EP 1 142 727 B1

Examples 5 to 7

Polyethylene terephthalate (containing lubricant, Tg = 69˚C) having an intrinsic viscosity measured in o-chlorophenol at 25˚C of 0.61 dl/g was extruded from a T die and quenched on a rotary cooling drum maintained at about 40˚ C while static electricity was applied thereto to obtain anunstretchedfilm. This unstretched filmwas then stretched to 3.6 times in a longitudinal direction at 115˚C to obtain a uniaxially stretched film. A coating solution having a solid content of 4 wt% shown in Table 3 was used as shown in Table 4 and applied to one surface of this uniaxially stretched film to a coating weight of 2 g/m$^2$ by a kiss coating technique. Thereafter, the coated film was stretched to 3.8 times in a transverse direction at 120˚ C, heated under tension at 230˚ C with a fixed length, and re-heated at 220˚ C while it was shrunk by 2 % in a transverse direction to obtain a laminated film having a thickness of 4.5 μm. The physical properties and evaluation results of this film are shown in Table 4.

Example 8

A laminated film was obtained in the same manner as in Example 5 except that the film was heated under tension at 240˚C with a fixed length and re-heated at 230˚C while it was shrunken by 3 % in a transverse direction. The physical properties and evaluation results of this laminated film are shown in Table 4.

Comparative Example 4

A biaxially oriented polyester film was obtained in the same manner as in Example 5 except that an adherent layer was not formed by coating. The physical properties and evaluation results of this laminated film are shown in Table 4.

Comparative Example 5

A laminated film was obtained in the same manner as in Example 5 except that the film was heated under tension at 220˚ C with a fixed length and was not re-heated. The physical properties and evaluation results of this laminated film are shown in Table 4.

Comparative Example 6

A laminated film was obtained in the same manner as in Example 5 except that the film was heated under tension at 210˚C with a fixed length and re-heated at 220˚C while it was shrunk by 1 % in a transverse direction. The physical properties and evaluation results of this laminated film are shown in Table 4.

Comparative Example 7

A laminated film was obtained in the same manner as in Comparative Example 6 except that the film was stretched to 3.0 times in a longitudinal direction and 4.0 times in a transverse direction. The physical properties and evaluation results of this laminated film are shown in Table 4.

Table 3

| | composition of adherent layer (wt%) | | | | |
|---|---|---|---|---|---|
| | acrylic resin 2 | polyester resin 2 | acryl modified polyester resin 2 | crosslinking agent | wetting agent |
| coating solution 4 | 45 | 45 | | | 10 |
| coating solution 5 | 40 | 40 | | 10 | 10 |
| coating solution 6 | | | 80 | 10 | 10 |

EP 1 142 727 B1

The compositions of the resins of Table 3 are as follows. acrylic resin 2: acrylic copolymer obtained by polymerizing 75 mol% of methyl methacrylate/15 mol% of ethyl acrylate/5 mol% of N-methylolacrylamide/5 mol% of N,N-dimethylacrylamide

polyester resin 2: copolyester comprising 70 mol% of terephthalic acid/18 mol% of isophthalic acid/12 mol% of 5-sodium sulfoisophthalic acid as acid components and 92 mol% of ethylene glycol/8 mol% of diethylene glycol as glycol components.

acryl modified polyester resin 2: acryl modified copolyester comprising 60 mol% of methyl methacrylate/25 mol% of isobutyl methacrylate/10 mol% of acrylic acid/5 mol% of 2-hydroxyethyl methacrylate as acrylic components, 36 mol% of terephthalic acid/10 mol% of isophthalic acid/4 mol% of 5-sodium sulfoisophthalic acid as acid components in polyester components, and 45 mol% of ethylene glycol/5 mol% of diethylene glycol as glycol components in polyester components.

crosslinking agent:

1,3-bis(N,N-diglycidylamine)cyclohexane

wetting agent: polyoxyethylene (n = 7) lauryl ether

EP 1 142 727 B1

Table 4

| | coating agent | secondary crystallization temperature (°C) | density $(g/cm^3)$ | Young's modulus in longitudinal direction (MPa) | center line average surface roughness (μm) |
|---|---|---|---|---|---|
| Ex.5 | coating solution 4 | 231 | 1.3936 | 5600 | 0.082 |
| Ex.6 | coating solution 5 | 231 | 1.3936 | 5600 | 0.085 |
| Ex.7 | coating solution 6 | 231 | 1.3936 | 5600 | 0.083 |
| Ex.8 | coating solution 4 | 235 | 1.4005 | 5900 | 0.082 |
| C.Ex.4 | no coating agent | 230 | 1.3935 | 5600 | 0.079 |
| C.Ex.5 | coating solution 4 | 218 | 1.3886 | 5500 | 0.082 |
| C.Ex.6 | coating solution 4 | 209 | 1.3906 | 5500 | 0.082 |
| C.Ex.7 | coating solution 4 | 209 | 1.3890 | 4400 | 0.082 |

| | melting type ink | | subliming type ink | | plane orientation degree |
|---|---|---|---|---|---|
| | adhesion | clearness | clearness | adhesion | |
| Ex.5 | ○ | ○ | ○ | ○ | 0.175 |
| Ex.6 | ○ | ○ | ○ | ○ | 0.175 |
| Ex.7 | ○ | ○ | ○ | ○ | 0.175 |
| Ex.8 | ○ | ○ | ○ | ○ | 0.176 |
| C.Ex.4 | × | × | × | × | 0.175 |
| C.Ex.5 | ○ | △ | △ | ○ | 0.172 |
| C.Ex.6 | ○ | △ | △ | ○ | 0.170 |
| C.Ex.7 | ○ | × | × | ○ | 0.160 |

Ex.: Example    C.Ex.: Comparative Example

Both melting and subliming type heat transfer inks are the same in terms of the evaluation results of adhesion and clearness.

When the laminated film of the present invention is used as a base film for thermosensitive transfer recording media, it exhibits excellent adhesion to an ink layer for both melting type and subliming type thermosensitive transfer printing systems and excellent dimensional stability at the time of printing, thereby making it possible to obtain an excellent image.

**Claims**

1. A thermosensitive transfer laminated film comprising:

   (A') a biaxially oriented polyester film having a secondary crystallization temperature of 210 to 240°C, a density of 1.390 to 1.410 and a Young's modulus in a longitudinal direction of 4,500 MPa or more wherein the second crystallisation temperature is the temperature of a heat absorption peak which appears on a low temperature side of the melt heat absorption peak of a polymer and is the closest to the melt heat absorption peak of the polymer when 10mg of a film sample is heated from normal temperature at a rate of 10°C/min by DSC (differential scanning calorimeter), and
   (B) an adherent layer formed on at least one surface of the above biaxially oriented polyester film.

2. The laminated film of claim 1, wherein the plane orientation degree of the biaxially oriented polyester film (A') is in the range of 0.150 to 0.200.

3. The laminated film of claim 1, wherein the adherent layer (B) contains a thermoplastic resin which is at least one selected from the group consisting of an acrylic resin, polyester resin, acryl modified polyester resin, polyurethane resin, polysiloxane resin, epoxy resin, polyether resin, vinyl resin, modified cellulose resin, gelatin and polyolefin resin.

4. The laminated film of claim 3, wherein the thermoplastic resin is water-soluble or water-dispersible.

5. The laminated film of claim 3, wherein the thermoplastic resin contains an acrylic resin and a polyester resin.

6. The laminated film of claim 5, wherein the acrylic resin is contained in an amount of 10 to 90 wt% and the polyester resin is contained in an amount of 90 to 10 wt% based on the total weight of the acrylic resin and the polyester resin.

7. The laminated film of claim 1, wherein the adherent layer (B) is a reaction product of a thermoplastic resin and a crosslinking agent.

8. The laminated film of claim 7, wherein the crosslinking agent is at least one selected from the group consisting of isocyanate, epoxy, oxazoline and melamine.

9. The laminated film of claim 1, wherein the adherent layer (B) is formed by applying a coating solution for forming an adherent layer to at least one surface of a stretchable polyester film, drying, stretching and heating the coated film.

10. The laminated film of claim 9, wherein the coating solution for forming an adherent layer is an aqueous solution containing a water-soluble or water-dispersible thermoplastic resin.

11. The laminated film of claim 1, wherein the adherent layer (B) has a thickness of 0.001 to 1 $\mu$m.

12. The laminated film of claim 1, wherein the centre line average surface roughness of the adherent layer (B) is in the range of 0.01 to 0.3 $\mu$m.

13. Use of the laminated film of claim 1 as a base film for thermosensitive transfer recording media.

14. Use of claim 13 for forming an ink layer on the adherent layer of a laminated film.

**Patentansprüche**

1. Laminierte Folie für wärmeempfindliche Übertragung, umfassend:

   (A') eine biaxial orientierte Polyesterfolie mit einer Sekundärkristallisationstemperatur von 210 bis 240˚C, einer Dichte von 1,390 bis 1,410 und einem Young'schen Modul in einer Längsrichtung von 4500 MPa oder mehr, wobei die Sekundärkristallisationstemperatur die Temperatur eines Wärmeabsorptionspeaks ist, der auf einer Niedertemperaturseite des Schmelzwärmeabsorptionspeaks eines Polymers erscheint und der am nächsten zu dem Schmelzwärmeabsorptionspeak des Polymers ist, wenn 10 mg einer Folienprobe von normaler Temperatur mit einer Rate von 10˚C/min durch DSC (Differentialscanningkalorimeter) erwärmt werden, und
   (B) eine Haftschicht, die auf mindestens einer Oberfläche der vorstehenden biaxial orientierten Polyesterfolie gebildet ist.

2. Laminierte Folie nach Anspruch 1, wobei das Ebenenorientierungsmaß der biaxial orientierten Polyesterfolie (A') in einem Bereich von 0,150 bis 0,200 liegt.

3. Laminierte Folie von Anspruch 1, wobei die Haftschicht (B) ein thermoplastisches Harz enthält, welches mindestens eines, ausgewählt aus der Gruppe, bestehend aus Acrylharz, Polyesterharz, acrylmodifiziertem Polyesterharz, Polyurethanharz, Polysiloxanharz, Epoxidharz, Polyetherharz, Vinylharz, modifiziertem Celluloseharz, Gelatine und Polyolefinharz, ist.

4. Laminierte Folie nach Anspruch 3, wobei das thermoplastische Harz wasserlöslich oder in Wasser dispergierbar ist.

5. Laminierte Folie nach Anspruch 3, wobei das thermoplastische Harz ein Acrylharz und ein Polyesterharz enthält.

6. Laminierte Folie nach Anspruch 5, wobei das Acrylharz in einer Menge von 10 bis 90 Gew.-% und das Polyesterharz in einer Menge von 90 bis 10 Gew.-%, bezogen auf das Gesamtgewicht des Acrylharzes und des Polyesterharzes, enthalten sind.

7. Laminierte Folie nach Anspruch 1, wobei die Haftschicht (B) ein Reaktionsprodukt aus einem thermoplastischen Harz und einem Vernetzungsmittel ist.

8. Laminierte Folie nach Anspruch 7, wobei das Vernetzungsmittel mindestens eines, ausgewählt aus der Gruppe, bestehend aus Isocyanat, Epoxid, Oxazolin und Melamin, ist.

9. Laminierte Folie nach Anspruch 1, wobei die Haftschicht (B) durch Auftragen einer Beschichtungslösung zum Bilden einer Haftschicht auf mindestens eine Oberfläche einer steckbaren Polyesterfolie, Trocknen, Strecken und Erwärmen des beschichteten Films gebildet ist.

10. Laminierte Folie nach Anspruch 9, wobei die Beschichtungslösung zum Bilden einer Haftschicht eine wässrige Lösung ist, die ein wasserlösliches oder ein in Wasser dispergierbares thermoplastisches Harz enthält.

11. Laminierte Folie nach Anspruch 1, wobei die Haftschicht (B) eine Dicke von 0,001 bis 1 $\mu$m aufweist.

12. Laminierte Folie nach Anspruch 1, wobei die Zentrallinien-Durchschnittsoberflächenrauhigkeit der Haftschicht (B) in einem Bereich von 0,01 bis 0,3 $\mu$m liegt.

13. Verwendung der laminierten Folie nach Anspruch 1 als eine Basisfolie für Aufzeichnungsmedien für eine wärmeempfindliche Übertragung.

14. Verwendung nach Anspruch 13 zum Bilden einer Tinteschicht auf der Haftschicht einer laminierten Folie.

**Revendications**

1. Film laminé pour transfert thermosensible comprenant :

   (A') un film polyester orienté biaxialement ayant une température de cristallisation secondaire comprise entre 210 et 240 ˚C, une densité comprise entre 1,390 et 1,410 et un module de Young dans le sens longitudinal de 4 500 MPa ou plus, dans lequel la température de cristallisation secondaire est la température d'un pic d'absorption thermique qui apparaît côté basse température du pic d'absorption thermique à l'état fondu d'un polymère et qui est au plus proche du pic d'absorption thermique à l'état fondu du polymère lorsque 10 mg d'un échantillon de film sont chauffés en partant de la température normale à une vitesse de 10 ˚C/minute par calorimétrie à balayage différentiel (DSC), et

(B) une couche adhésive formée sur au moins une surface du film polyester orienté biaxialement ci-dessus.

2. Film laminé selon la revendication 1, dans lequel le degré d'orientation dans le plan du film polyester orienté biaxialement (A') est compris dans la plage de 0,150 à 0,200.

3. Film laminé selon la revendication 1, dans lequel la couche adhésive (B) comprend une résine thermoplastique qui est au moins l'une de celles choisies dans le groupe constitué par une résine acrylique, une résine polyester, une résine polyester modifiée par un composé acrylique, une résine polyuréthane, une résine polysiloxane, une résine époxy, une résine polyéther, une résine vinylique, une résine de cellulose modifiée, une gélatine et une résine polyoléfinique.

4. Film laminé selon la revendication 3, dans lequel la résine thermoplastique est soluble ou dispersible dans l'eau.

5. Film laminé selon la revendication 3, dans lequel la résine thermoplastique contient une résine acrylique et une résine polyester.

6. Film laminé selon la revendication 5, dans lequel la résine acrylique est présente dans une quantité comprise entre 10 et 90 % en poids et la résine polyester dans une quantité de 90 à 10 % en poids sur la base du poids total de la résine acrylique et de la résine polyester.

7. Film laminé selon la revendication 1, dans lequel la couche adhésive (B) est un produit de la réaction d'une résine thermoplastique et d'un agent de réticulation.

8. Film laminé selon la revendication 7, dans lequel l'agent de réticulation est au moins l'un de ceux choisis dans le groupe constitué par l'isocyanate, l'époxyde, l'oxazoline et la mélamine.

9. Film laminé selon la revendication 1, dans lequel la couche adhésive (B) est formée par application d'une solution de revêtement pour former une couche adhésive sur au moins une surface d'un film polyester étirable, par séchage, étirage et chauffage du film revêtu.

10. Film laminé selon la revendication 9, dans lequel la solution de revêtement pour former une couche adhésive est une solution aqueuse contenant une résine thermoplastique soluble ou dispersible dans l'eau.

11. Film laminé selon la revendication 1, dans lequel la couche adhésive (B) présente une épaisseur comprise entre 0,001 et 1 $\mu$m.

12. Film laminé selon la revendication 1, dans lequel la rugosité superficielle moyenne arithmétique de la couche adhésive (B) est comprise dans la plage allant de 0,01 à 0,3 $\mu$m.

13. Utilisation du film laminé selon la revendication 1 en tant que film support destiné à des supports d'enregistrement par transfert thermosensible.

14. Utilisation selon la revendication 13 pour former une couche d'encre sur la couche adhésive d'un film laminé.

**REFERENCES CITED IN THE DESCRIPTION**

**Patent documents cited in the description**

- JP 8104064 A